# EUROPEAN PATENT SPECIFICATION

(11) **EP 4 274 370 B1**
(45) Date of publication and mention of the grant of the patent: **25.11.2026**
(21) Application number: 21921933.4
(22) Date of filing: 01.02.2021
(51) Int. Cl.: H04W 88/06, H04W 84/12

(54) **COMMUNICATION CIRCUIT AND TERMINAL**
KOMMUNIKATIONSSCHALTUNG UND ENDGERÄT
CIRCUIT DE COMMUNICATION ET TERMINAL

(43) Date of publication of application: 08.11.2023
(73) Proprietor: Huawei Technologies Co., Ltd., Shenzhen, Guangdong 518129 (CN)
(72) Inventor: LI, Weinan, Shenzhen, Guangdong 518129 (CN); JING, Weitao, Shenzhen, Guangdong 518129 (CN); SHI, Po, Shenzhen, Guangdong 518129 (CN)
(74) Representative: Thun, Clemens
(86) International application number: PCT/CN2021/074640
(87) International publication number: WO 2022/160333

(56) References cited:
- WO-A1-2020/163133
- WO-A2-2018/125686
- CN-A- 102 036 430
- CN-A- 102 404 020
- CN-A- 102 420 632
- CN-A- 106 462 530
- US-A1- 2002 141 441
- US-A1- 2012 049 894
- US-A1- 2013 309 979
- US-A1- 2016 262 169
- US-A1- 2017 033 829
- US-A1- 2017 135 125

## Description

### TECHNICAL FIELD

This application relates to the communication field, and in particular, to a communication circuit and a terminal.

### BACKGROUND

With the implementation and commercial use of a fifth-generation 5G communication technology of a cellular network and Wi-Fi 6 of a wireless local area network, a same set of electronic devices usually needs to support a scenario in which a plurality of working modes are used simultaneously. For example, an electronic device that supports both Wi-Fi 6 and 5G, or supports both 4G and 5G modes gradually becomes a standard configuration in the industry. In a conventional technology, a set of independent radio frequency hardware needs to be equipped for one mode. This brings great challenges to costs and an area of the electronic device.

Further, US 2017/135125 A1 refers to a mobile terminal device having a first radio connection and a second radio connection and including a radio processing circuit configured to receive and process radio frequency signals and a baseband modem system including of one or more baseband modems, the baseband modem system being configured to identify a missed subframe of the first radio connection, select a subframe from one or more additional subframes of the first radio connection during which to schedule radio activity of the second radio connection based on a probability metric for each of the one or more additional subframes, where the probability metric for each given subframe of the one or more additional subframes indicates a probability that the subframe contains a data block of the missed subframe, and perform the scheduled radio activity of the second radio connection during the selected subframe of the first radio connection.

Further, US 2017/033829 A1 refers to a method including a reception, at a long-term evolution (LTE) circuitry of wireless device from a wireless local area network (WLAN) circuitry of the wireless device while the LTE circuitry has control of at least one antenna of the wireless device, a request for control of the at least one antenna. Communications by the LTE circuitry using the at least one antenna corresponds to a first frequency band, communications by the WLAN circuitry using the at least one antenna correspond to a second frequency band, and the first frequency band at least partially overlaps the second frequency band. The method further includes sending a response from the LTE circuitry to the WLAN circuitry based on data included in the request.

Further, US 2016/262169 A1 refers to a user equipment (UE) including a wireless local area network (WLAN) transceiver chain that is used for both WLAN communications and communications on another wireless radio access technology (RAT), such as wireless wide area network (WWAN) communications. The communications may be synchronized, and then at least a portion of the WLAN transceiver chain may be scheduled for time-division multiplexed (TDM) communications, wherein a first set of TDM intervals are for communications using the other RAT, and a second set of TDM intervals are for communications using the WLAN.

### SUMMARY

Embodiments of this application provide a communication circuit, to improve use efficiency of radio frequency hardware that supports multi-mode integration, and reduce costs and an area of the communication circuit. This problem is solved by the subject matter of independent claim 1. Further implementation forms of the communication circuit are provided in the dependent claims. Furthermore, a terminal according to claim 8 is provided which comprises the communication circuit. The following aspects and implementations are provided for illustrative purposes.

It should be understood that in the solutions provided in embodiments of this application, a communication circuit may be a wireless communication device, or may be some components, for example, an integrated circuit product such as a system on chip or a communication chip, in a wireless communication device. The wireless communication device may be a computer device that supports a wireless communication function.

The communication circuit may include a baseband processing circuit and a radio frequency circuit. The baseband processing circuit sometimes is also referred to as a modem or a baseband circuit. The radio frequency circuit is a functional circuit configured to process a communication signal in a radio frequency analog field, and includes but is not limited to functions such as filtering, receiving, transmission, amplification, down-conversion, up-conversion, digital-to-analog, and analog-to-digital conversion. In physical implementation, some or all chips in the communication circuit may be integrated into a system on chip (SoC).

It should be understood that in the solutions provided in embodiments of this application, a chip is a circuit hardware structure having a complete chip package pin. The chip may be a single chip having a single bare die, or may be a module-level chip integrating a filter and a plurality of bare die structures.
According to a first aspect, a communication circuit is provided and includes: a shared radio frequency circuit, a baseband processing circuit, and an antenna. The antenna is configured to receive and send a first-mode signal and a second-mode signal. The shared radio frequency circuit is coupled between the baseband processing circuit and the antenna, and the shared radio frequency circuit is configured to process the first-mode signal and the second-mode signal in a time-division manner. The shared radio frequency circuit includes a slave control interface, and the baseband processing circuit includes a master control interface. The master control interface is coupled to the slave control interface by using a control bus, and is used for configuring the shared radio frequency circuit to process the first-mode signal and the second-mode signal in the time-division manner.

The master and slave control interfaces are respectively disposed in the baseband processing circuit and the shared radio frequency circuit that is configured to process the first-mode signal and the second-mode signal in the time-division manner, so that shared processing of signals in two modes can be implemented in one circuit. In addition, the main and slave control interfaces share control signals in two sets of modes, so that real-time and efficient mode switching is implemented.

In an optional implementation, the control bus includes a mobile industry processor interface (MIPI) control line or a general purpose input/output (GPIO) control line. MIPI and GPIO standard signals are used, so that a plurality of states can be controlled, and the shared radio frequency circuit can be more flexibly controlled.

In an optional implementation, when the shared radio frequency circuit is configured to switch from processing the first-mode signal to processing the second-mode signal, the shared radio frequency circuit is in a running mode. The switching in the running state avoids power consumption and startup time that are caused by disabling the shared radio frequency circuit to release a resource.

In an optional implementation, the shared radio frequency circuit is configured to continuously switch between processing the first-mode signal and processing the second-mode signal, to implement fast switching of the signals in two modes, and avoid an extra delay.

In an optional implementation, a signal transmitted by the control bus includes a control bit with a priority, which is used for configuring the priority of processing the first-mode signal and the second-mode signal by the shared radio frequency circuit. A control bit with a specific priority is fixed in the control bit, so that system consumption caused by resource sharing and preemption is avoided.

In an optional implementation, the shared radio frequency circuit includes a switch chip, the slave control interface includes a first slave control interface, the first slave control interface is disposed on the switch chip, and the switch chip configures a transmission path of the first-mode signal and the second-mode signal based on a control signal received by the first slave control interface. The switch chip that can be configured is used, so that gating of different signals may be implemented by using one switch chip, and more flexible radio frequency architecture multiplexing and radio frequency resource sharing are implemented.

In an optional implementation, the shared radio frequency circuit includes a power amplifier chip, the slave control interface includes a second slave control interface, the second slave control interface is disposed on the power amplifier chip, and the power amplifier chip is configured to amplify the first-mode signal and the second-mode signal based on a control signal received by the second slave control interface. A radio frequency power amplifier chip that can be shared is implemented, so that radio frequency resources are greatly saved.

In an optional implementation, a frequency range of the first-mode signal is different from and overlaps a frequency range of the second-mode signal. In consideration of design difficulty and bandwidth limitation of a power amplifier chip, a power amplifier is shared for signals that are in different modes and that have the foregoing signal characteristics, so that design difficulty and implementation costs are reduced.

In an optional implementation, the shared radio frequency circuit includes an envelope tracking chip, the slave control interface includes a third slave control interface, the third slave control interface is disposed on the envelope tracking chip, and the envelope tracking chip is configured to supply, based on a control signal received by the third slave control interface, power to a power amplifier used for the first-mode signal and the second-mode signal. The power is supplied to the power amplifier of the signals in different modes by using the envelope tracking chip configured to further reduce power consumption of the power amplifier, so that the area and costs that are of the communication circuit can be further reduced.

In an optional implementation, the envelope tracking chip includes an envelope tracking mode and an average power tracking mode, where a bandwidth of the first-mode signal is greater than a bandwidth of the second-mode signal, the envelope tracking chip is configured to supply power to the power amplifier in the average power tracking mode for the first-mode signal, and the envelope tracking chip is configured to supply power to the power amplifier in the envelope tracking mode for the second-mode signal. In consideration of bandwidth characteristics of the signals in different modes, the envelope tracking chip configured to implement the foregoing functions may have higher design costs and power consumption.

In an optional implementation, the shared radio frequency circuit includes a low noise amplifier chip, the slave control interface includes a fourth slave control interface, the fourth slave control interface is disposed on the low noise amplifier chip, and the low noise amplifier chip is configured to amplify the first-mode signal and the second-mode signal based on a control signal received by the fourth slave control interface. A low noise amplifier chip that can be shared is implemented, so that the radio frequency resources are further saved.

In an optional implementation, the shared radio frequency circuit includes a radio frequency transceiver chip, the slave control interface includes a level-1 slave control interface and a level-2 master control interface, the level-1 slave control interface and the level-2 master control interface are jointly disposed on the radio frequency transceiver chip, the radio frequency transceiver chip receives configuration of the baseband processing circuit through the level-1 slave control interface, and the radio frequency transceiver chip configures a level-2 slave control interface through the level-2 master control interface. Main control is set twice, so that the shared radio frequency circuit may have better flexibility and shared switching response.

In an optional implementation, the level-2 slave control interface includes one or more of the first slave control interface, the second slave control interface, the third slave control interface, and the fourth slave control interface.

In an optional implementation, the first-mode signal is a 5G signal, and the second-mode signal is a 4G signal. Based on a same communication standard, sharing of 4G and 5G radio frequency resources is more operable and competitive.

In an optional implementation, the first-mode signal is a cellular network signal, and the second-mode signal is a wireless local area network signal.

In an optional implementation, the first-mode signal is a 4G signal or a 5G signal, and the second-mode signal is a Wi-Fi 6 signal or a Wi-Fi 5 signal.

In an optional implementation, the baseband processing circuit includes a first baseband processing chip and a second baseband processing chip, the master control interface includes a first master control interface and a second master control interface, the first master control interface is located on the first baseband processing chip, the second master control interface is located on the second baseband processing chip, and the first master control interface and the second master control interface are coupled to the slave control interface by using the control bus. Different communication standards are integrated into different chips, so that chip manufacturing costs are better.

According to a second aspect, a terminal is further provided and includes a memory, a processor, an input/output apparatus, and the communication circuit in one of the foregoing optional implementations.

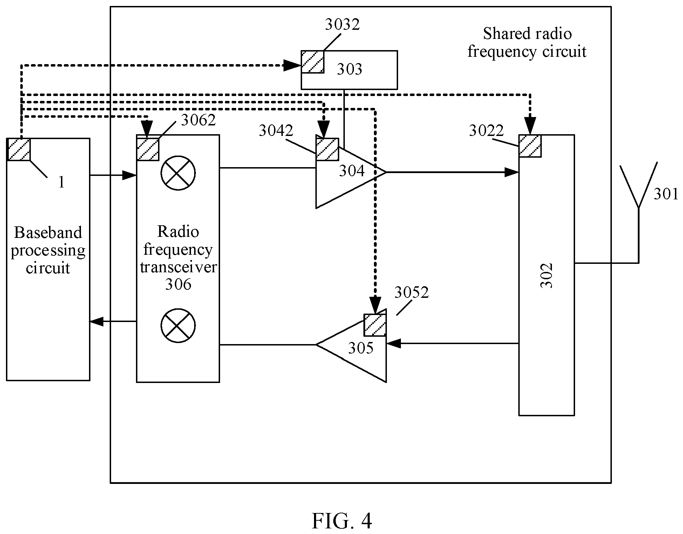

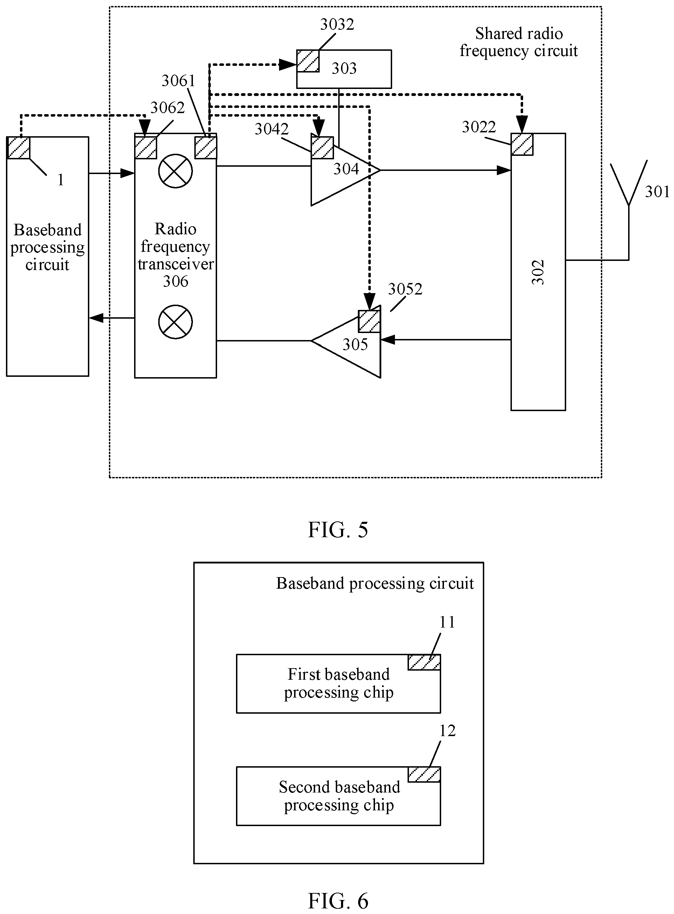

In the following description, the invention is described with particular reference to figures 4 and 5, while the description of the remaining figures is provided for illustrative purposes for a better understanding of the invention.

### BRIEF DESCRIPTION OF DRAWINGS

FIG. 1 is a schematic diagram of a wireless communication system that supports a plurality of communication protocols according to an embodiment of this application;
FIG. 2 is a schematic diagram of a communication circuit that supports signals in different modes according to an embodiment of this application;
FIG. 3 is a schematic diagram of switching between signals in different modes according to an embodiment of this application;
FIG. 4 is a schematic diagram of another communication circuit that supports signals in different modes according to an embodiment of this application;
FIG. 5 is a schematic diagram of another communication circuit that supports signals in different modes according to an embodiment of this application;
FIG. 6 is a schematic diagram of a baseband processing circuit that supports signals of different wireless communication standards according to an embodiment of this application; and
FIG. 7 is a schematic diagram of a terminal according to an embodiment of this application.

It should be understood that, in the foregoing schematic diagrams, sizes and forms of block diagrams are for reference only, and should not constitute an exclusive interpretation of embodiments of this application. Relative locations and inclusion relationships between the block diagrams shown in the schematic diagrams of structures are merely used for schematically representing structural associations between the block diagrams, rather than limiting a physical connection manner in embodiments of this application.

### DESCRIPTION OF EMBODIMENTS

The following further describes the technical solutions provided in this application with reference to the accompanying drawings and embodiments. It should be understood that a system structure and a service scenario provided in embodiments of this application are mainly intended to explain some possible implementations of the technical solutions in this application, and should not be construed as a unique limitation on the technical solutions in this application. A person of ordinary skill in the art may know that, as a system evolves and an updated service scenario emerges, the technical solutions provided in this application are still applicable to same or similar technical problems.

It should be understood that the technical solutions provided in embodiments of this application include a sounding reference signal sending method and a related apparatus. Principles for resolving problems by using the technical solutions are the same or similar. In descriptions in the following specific embodiments, although same content may not be repeated, it should be considered that the specific embodiments are mutually referenced and may be combined with each other.

In a wireless communication system, devices may be classified into devices that provide a wireless network service and devices that use a wireless network service. The devices that provide the wireless network service are devices that form a wireless communication network, and may be briefly referred to as network devices (network equipment) or network elements. The network devices generally belong to operators (for example, China Mobile and Vodafone) or infrastructure providers (for example, China Tower), and are operated or maintained by these vendors. The network devices may further be classified into radio access network (RAN) devices and core network (CN) devices. Typical RAN devices include a base station (BS).

It should be noted that, the base station may be a generation NodeB (generation NodeB, gNB) in a 5G new radio (NR) system or an evolved NodeB (eNB) in a 4G long term evolution (LTE) system. Base stations may be classified into a macro base station and a micro base station based on different physical forms or transmit powers of the base stations. The micro base station sometimes is also referred to as a miniature base station or a small cell.

The devices that use the wireless network service are generally located on an edge of a network, and may be briefly referred to as terminals. A terminal can establish a connection to a network device, and provides a specific wireless communication service for a user based on a service of the network device. It should be understood that, because the terminal has a closer relationship with the user, the terminal sometimes is also referred to as a user equipment (UE) or a subscriber unit (SU). In addition, compared with a base station that is generally placed at a fixed location, the terminal usually moves along with the user, and sometimes is also referred to as a mobile station (MS). In addition, some network devices such as a relay node (RN) or a wireless router sometimes may also be considered as terminals because the network devices have a UE identity or belong to a user.

The base station mainly covers an outdoor communication scenario, and a wireless local area network (WLAN) device specially configured for covering an indoor communication scenario exists in the wireless communication system. The base station generally complies with a wireless communication standard of the third generation partnership project (3GPP), and the WLAN device generally complies with another wireless communication standard, for example, a wireless communication standard of an 802 series (such as 802.11, 802.15, or 802.20) of the Institute of Electrical and Electronics Engineers (IEEE).

Communication devices of the 802 series include access points (APs) and stations (STAs). The AP is a wireless access point, a creator of one wireless network, and a central node of the network. Generally, a wireless router used in a home or office is one AP. The STA station means that each terminal connected to a wireless network (for example, a notebook computer, a PDA, or another user equipment that can connect to the network) can be referred to as one station.

Therefore, a terminal corresponding to the base station and the wireless local area network may be a mobile phone, a tablet computer, a laptop computer, a wearable device (for example, a smart watch, a smart band, a smart helmet, or smart glasses), or other devices that have a wireless access capability, for example, an intelligent vehicle and various internet of things (IOT) devices including various smart home devices (such as a smart meter and a smart home appliance) and smart city devices (such as a security or monitoring device and an intelligent road transportation facility).

For ease of description, the technical solutions in embodiments of this application are described in detail by using the base station, the access point, and the terminal as examples in this application.

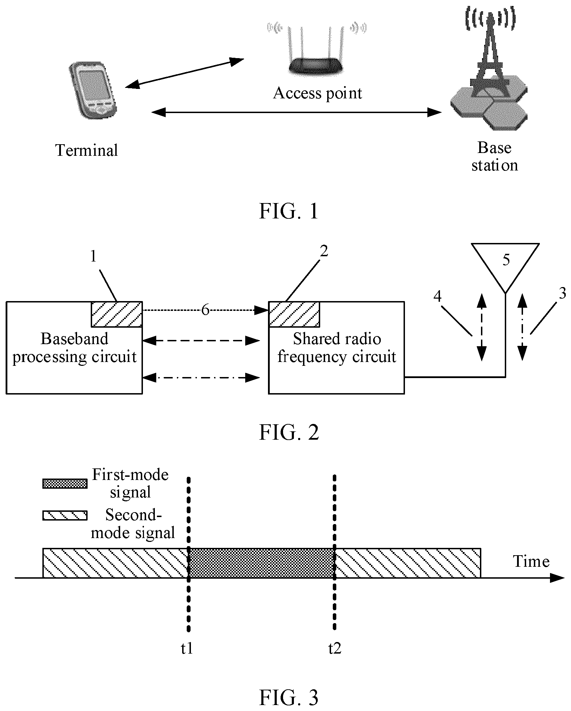

FIG. 1 is a schematic diagram of a wireless communication system that supports a plurality of communication protocols according to an embodiment of this application. As shown in FIG. 1, the wireless communication system includes a terminal, a base station, and a wireless router.

In the wireless communication system, the base station may provide communication coverage for a specific geographical area by using an integrated or external antenna device. One or more terminals in a communication coverage area of the base station may be connected to the base station. One base station may manage one or more cells. Each cell has one identification. The identification is also referred to as a cell identity (cell ID). From a perspective of a radio resource, a cell is a combination of a downlink radio resource and an uplink radio resource (optional) that is paired with the downlink radio resource.

In the wireless communication system, the terminal and the base station each support one or more same RATs, for example, 5G NR, 4G LTE, or a RAT for a future evolved system. Specifically, the terminal and the base station use a same air interface parameter, coding scheme, modulation scheme, and the like, and communicate with each other based on a radio resource specified by the system.

It should be understood that the wireless communication system may comply with a wireless communication standard of the third generation partnership project (3GPP).

Further, in FIG. 1, the wireless router is further included. In addition to accessing a cellular network, the terminal may further support accessing the wireless router. The terminal and the wireless router may comply with, for example, a wireless communication standard of an 802 series (such as 802.11, 802.15, or 802.20) of the Institute of Electrical and Electronics Engineers (IEEE).

It should be understood that, although FIG. 1 shows only one base station, one terminal, and one wireless router, the wireless communication system may also include another quantity of base stations, terminals, and wireless routers. In addition, the wireless communication system may further include an electronic device of another communication standard, for example, IoT or BT.

FIG. 2 is a schematic diagram of a communication circuit that supports signals in different modes according to an embodiment of this application. The communication circuit includes an antenna 5, a shared radio frequency circuit, and a baseband processing circuit. The antenna 5 is configured to receive and send a first-mode signal 3 and a second-mode signal 4. The signal 3 and the signal 4 may be signals of different versions in a same wireless communication standard. For example, the signal 3 may be a 4G signal, and the signal 4 may be a 5G signal. Alternatively, the signal 3 and the signal 4 may be signals in different communication standards. For example, the signal 3 may be a cellular signal, for example, including but not limited to a 4G signal or a 5G signal. The signal 4 may be a Wi-Fi signal, including but not limited to a Wi-Fi 6 signal or a Wi-Fi 5 signal.

The shared radio frequency circuit is configured to process the signal 3 and the signal 4 in a time-division manner, for example, configured to transmit the time-division signal 3 in a first time period, and transmit the signal 4 in a second time period. The shared radio frequency circuit is coupled between the baseband processing circuit and the antenna. The baseband processing circuit is configured to process the signal 3 or the signal 4 in a digital domain.

A master control interface 1 and a slave control interface 2 are respectively disposed for the baseband processing circuit and the shared radio frequency circuit, to prevent the signal 3 and the signal 4 from preempting resources of the shared radio frequency circuit. A control bus 6 is coupled between the master control interface 1 and the slave control interface 2, and is configured to transmit a control signal of a baseband control circuit for the shared radio frequency circuit, to implement configuration of the baseband control circuit for the shared radio frequency circuit.

For example, the master control interface 1 and the slave control interface 2 may be GPIO interfaces, and the control signal implements the configuration of the baseband control circuit for the shared radio frequency circuit by using a high level state and a low level state.

Optionally, the master control interface 1 and the slave control interface 2 may be MIPI interfaces. Compared with the GPIO interface having high and low level states for control, an MIPI conforms with an I2C protocol. Therefore, GPIO does not have a clock line and controls a small quantity of states. However, the MIPI has a clock line and a data line, and a controlled component has various registers to control different component states, so that more states can be flexibly controlled.

Preferably, to optimize a waiting problem that is caused by resource preemption and that is brought by software arbitration, a system may set a control bit with a priority in the control signal. For example, in 000X, if X is 1, the shared radio frequency circuit is configured with a high priority. Alternatively, if X is 0, the shared radio frequency circuit is configured with a low priority. The shared radio frequency circuit directly makes a corresponding response based on a priority of an instruction in the control signal. For example, if a priority of an instruction indicating to switch to a state of transmitting the signal 3 is high, the shared radio frequency circuit directly switches from a state of transmitting the signal 4 to the state of transmitting the signal 3. If a priority of an instruction, for example, indicating to switch back to the state of transmitting the signal 4, of the control signal is low, the shared radio frequency circuit continues to maintain the state of transmitting the signal 3. Because an upper layer does not need to determine and preempt a resource of the shared radio frequency circuit, the shared radio frequency circuit does not need to perform a step of powering off and releasing the resource. When the system switches from transmitting the signal 3 to transmitting the signal 4, the shared radio frequency circuit may maintain a running state. In this way, a time interval between power-on and power-off of the shared radio frequency circuit is reduced, time for a wireless communication apparatus to switch between signals in different modes is reduced, and corresponding time is increased.

Further, to implement smoother switching transition, the shared radio frequency circuit may integrate priority determining logic, and perform autonomous logic determining on a control signal including a priority. The shared radio frequency circuit responds, based on priority information in the control signal, to a control instruction received on the control bus. For example, two priorities are used as examples. The shared radio frequency circuit determines a priority of an instruction in a control signal. If the priority of the instruction in the control signal is high, a priority of a current working state is determined. When the priority of the control signal is greater than the priority of the current working state (where a higher-priority mode in the system starts), the current working state is saved, and switching is performed based on the control signal. When a priority of a received control signal is low, the saved working state is updated, but an updated working state does not take effect. After a high-priority instruction task is completed and exited, a previously-saved low-priority working state is restored and takes effect immediately.

The foregoing integrated priority determining logic is used, so that the wireless communication apparatus can implement continuous state switching shown in FIG. 3. When a priority of a first-mode signal in the control signal is high, and the working state is in a state of transmitting a second-mode signal, the shared radio frequency circuit switches from the second-mode signal to the first-mode signal at a moment t1. After a task of transmitting the first-mode signal is completed, at a moment t2, the state of transmitting the first-mode signal is switched back to a state of transmitting the second-mode signal. Therefore, as shown in FIG. 3, it can be learned that the wireless communication apparatus continuously switches between transmitting the first-mode signal and transmitting the second-mode signal.

FIG. 4 is a schematic diagram of another communication circuit that supports signals in different modes according to an embodiment of this application. As shown in FIG. 4, a shared radio frequency circuit may include but is not limited to a switch chip 302. The switch chip 302 is coupled between an antenna 301 and a plurality of other radio frequency chips, and is configured to implement sharing and selection between the antenna 301 and the plurality of radio frequency chips. When the antenna 301 is configured to receive and send a first-mode signal and a second-mode signal, the switch chip 302 may implement selection and sharing of the first-mode signal and the second-mode signal. The switch chip 302 may integrate a first slave control interface 3022, to transmit a control signal with priority information with a master control interface 1 of a baseband processing circuit by using a control bus.

Optionally, the shared radio frequency circuit may further include a power amplifier chip 304. For example, the first-mode signal is a 5G signal, and the second-mode signal is a 4G signal. The power amplifier 304 may be designed as a broadband power amplifier, and covers both a 5G radio frequency band and a 4G radio frequency band. Similarly, the power amplifier 304 may also integrate a second slave control interface 3042, to receive, by using the control bus, a control signal that is transmitted by the master control interface 1 of the baseband processing circuit and that has priority information. The power amplifier chip 304 may be a separate power amplifier bare die, or may be a module-level chip integrating a plurality of power amplifier bare dies. When the power amplifier chip 304 is the latter one, the plurality of power amplifier bare dies share a control signal of the second slave control interface 3042.

Optionally, the shared radio frequency circuit may further include a low noise amplifier chip 305. Similarly, the low noise amplifier chip 305 may be designed as a broadband amplifier, and covers both the 5G radio frequency band and the 4G radio frequency band. The low noise amplifier chip 305 is configured to integrate a third slave control interface 3052, to receive, by using the control bus, a control signal that is transmitted by the master control interface 1 of the baseband processing circuit and that has priority information. The low noise amplifier chip 305 may be a separate low noise amplifier bare die, or may be a module-level chip integrating a plurality of low noise amplifier bare dies. When the low noise amplifier chip 305 is the latter one, the plurality of low noise amplifier bares share the third slave control interface 3052.

Preferably, in current 5G NR frequency bands for commercial use, N77 (3300 MHz to 3800 MHz) and N78 (3300 MHz to 4200 MHz) are preferred for commercial use. Because N77 and N78 are different from and overlap B42 (3400 MHz to 3600 MHz), B43 (3600 MHz to 3800 MHz) of LTE, in terms of design optimization and control difficulty of a hardware resource, the power amplifier 304 and the low noise amplifier 305 preferentially implement time-division sharing of signals in two modes in the foregoing frequency bands.

Optionally, the shared radio frequency circuit may further include an envelope tracking chip 303. The envelope tracking chip 303 may include an envelope tracking module and an average power tracking module. The envelope tracking chip 303 may be used for time-division sharing of 4G and 5G power amplifiers. Similarly, the envelope tracking chip 303 may integrate a fourth slave control interface 3032, to receive, by using the control bus, a control signal that is transmitted by the master control interface 1 of the baseband processing circuit and that has priority information.

Preferably, in a 5G mode, a bandwidth for transmitting a signal is close to 100 MHz, and the bandwidth is much greater than 20 MHz in LTE. Therefore, in a 4G mode, an ET mode may be preferably enabled in the envelope tracking chip 303, and in the 5G mode, an APT mode may be preferably enabled.

Optionally, the shared radio frequency circuit may further include a radio frequency transceiver 306. The radio frequency transceiver 306 may integrate a fifth slave control interface 3062, to receive, by using the control bus, a control signal that is transmitted by the master control interface 1 of the baseband processing circuit and that has priority information. For example, one or more functional circuits in a receive channel of a radio frequency transceiver may implement time-division sharing of 4G and 5G signals. For example, a shared functional circuit in the receive channel may include but is not limited to one or more of a frequency mixer, a low noise amplifier, a filter, an analog-to-digital converter (ADC), and a phase-locked loop.

Time-division sharing may be flexibly designed and adjusted based on a specific functional circuit. For example, the analog-to-digital converter may include a first ADC and a second ADC. When the first-mode signal is processed as a narrowband signal, for example, a 4G intermediate frequency signal, only the first ADC may be used. When the second-mode signal is processed as a broadband signal, for example, a 5G intermediate frequency signal, the first ADC and the second ADC may be used.

Optionally, one or more functional circuits in a transmit channel of the radio frequency transceiver may implement time-division sharing of 4G and 5G signals. For example, a shared functional circuit in the transmit channel may include but is not limited to one or more of a frequency mixer, a power amplifier, a filter, a digital-to-analog converter (ADC), and a phase-locked loop.

FIG. 5 is a schematic diagram of another communication circuit that supports signals in different modes according to an embodiment of this application. Based on the foregoing embodiment, this embodiment uses a solution of a two-level control bus. At a first level, a master control interface 1 of a baseband control circuit and a slave control interface 3062 of a radio frequency transceiver perform first-level control. The radio frequency transceiver 306 implements time-division sharing based on a priority of a control signal of the baseband control circuit.

At a second level, the radio frequency transceiver 306 performs hierarchical control on one or more of 303, 304, 305, and 306 through a second master control interface 3061.

FIG. 6 is a schematic diagram of a baseband processing circuit that supports signals of different wireless communication standards according to an embodiment of this application. It is assumed that a first-mode signal and a second-mode signal are the signals of the different communication standards. For example, the first-mode signal may be a cellular signal, including but not limited to a 4G signal or a 5G signal. The second-mode signal may be a Wi-Fi signal, including but not limited to a Wi-Fi 6 signal or a Wi-Fi 5 signal. Generally, for a baseband processing circuit, based on different complexity, functions of processing the supported signals of the different communication standards are usually integrated into different physical chips. As shown in FIG. 6, based on the foregoing embodiment, the baseband processing circuit may include a first baseband processing chip and a second baseband processing chip. For example, the first baseband processing chip may be configured to implement baseband processing of a cellular signal, and the second baseband processing chip is configured to implement baseband processing of a Wi-Fi signal.

Optionally, a master control interface configured to control a shared radio frequency circuit may include two parts: a first master control interface 11 and a second master control interface 12. The first master control interface 11 is disposed on the first baseband processing chip, and the second master control interface 12 is disposed on the second baseband processing chip. The first master control interface 11 and the second master control interface 12 are jointly coupled to one or more slave control interfaces in the shared radio frequency circuit, and jointly control, by using a shared control bus, switching of a working state of one or more radio frequency modules in the shared radio frequency circuit from processing the first-mode signal to processing the second-mode signal.

Optionally, the first baseband processing chip and the second baseband processing chip may alternatively share only one master control interface. The master control interface is disposed on the first baseband processing chip, is coupled to one or more slave control interfaces in the shared radio frequency circuit, and controls, by using the shared control bus, switching of a working state of one or more radio frequency modules in the shared radio frequency circuit from processing the first-mode signal to processing the second-mode signal.

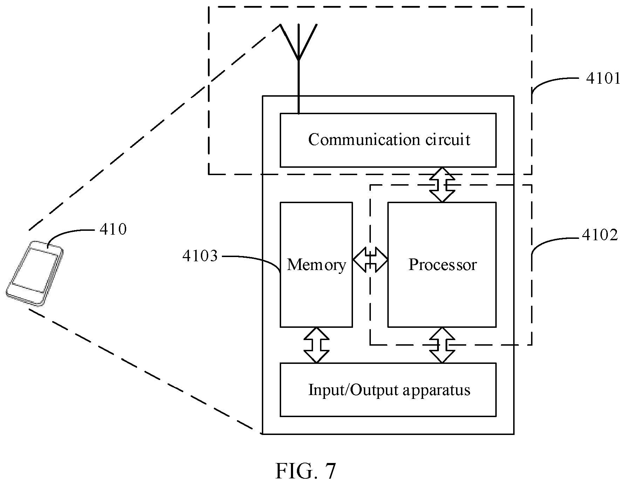

An embodiment of this application further provides a terminal 410. Refer to FIG. 7. The terminal 410 may include a communication circuit 4101, a memory 4103, a processor 4102, and an input/output apparatus. The shared radio frequency circuit and the baseband processing circuit in the foregoing embodiments are disposed in the communication circuit 4101 herein.

The processor 4102 is mainly configured to control the entire terminal, execute a software program, and process data of the software program. For example, the processor 4102 is configured to support an electronic device in performing the actions described in the foregoing method embodiments. The memory 4103 is mainly configured to store the software program and the data. The communication circuit is mainly configured to perform conversion between a baseband signal and a radio frequency signal, and process the radio frequency signal and the baseband signal. The input/output apparatus, such as a touchscreen, a display, or a keyboard, is mainly configured to receive data input by a user and output data to the user.

After the terminal 410 is powered on, the processor 4102 may read the software program in the memory 4103, interpret and execute instructions of the software program, and process the data of the software program. When data needs to be sent wirelessly, after performing baseband processing on the to-be-sent data, the communication circuit outputs a baseband signal to a radio frequency circuit. After performing radio frequency processing on the baseband signal, the radio frequency circuit sends a radio frequency signal to the outside in a form of an electromagnetic wave by using an antenna. When data is sent to the terminal 410, the radio frequency circuit receives the radio frequency signal by using the antenna, converts the radio frequency signal into a baseband signal, and then converts the baseband signal into data and processes the data.

In embodiments of this application and the accompanying drawings, the terms "first", "second", "third", and the like are intended to distinguish between similar objects but do not necessarily indicate a specific order or sequence. In addition, the terms "include", "have", and any other variants thereof are intended to indicate non-exclusive inclusions, for example, including a series of steps or units. The method, system, product, or device is not limited to the steps or units that are literally listed, but may include other steps or units that are not literally listed or that are inherent to these processes, methods, products, or devices.

It should be understood that in this application, "at least one" refers to one or more, and "a plurality of" refers to two or more. "And/or" is used for describing an association relationship between associated objects, and represents that three relationships may exist. For example, "A and/or B" may represent the following three cases: Only A exists, only B exists, and both A and B exist. A and B may be singular or plural. The character "/" generally indicates an "or" relationship between the associated objects. "At least one of the following items (pieces)" or a similar expression thereof means any combination of these items, including a single item (piece) or any combination of plural items (pieces). For example, at least one of a, b, or c may represent: a, b, c, a and b, a and c, b and c, or a, b, and c, where a, b, and c may be singular or plural.

It should be understood that sequence numbers of the foregoing processes do not mean execution sequences in this application. The execution sequences of the processes should be determined based on functions and internal logic of the processes, and should not be construed as any limitation on the implementation processes of embodiments of this application. The term "coupled" mentioned in this application is used for indicating interworking or interaction between different components, and may include a direct connection or an indirect connection via another component.

All or some of the foregoing embodiments of this application may be implemented by using software, hardware, firmware, or any combination thereof. When software is used for implementing the embodiments, a part or all of the embodiments may be implemented in a form of a computer program product. The computer program product includes one or more computer program code or computer program instructions. When the computer program instructions are loaded and executed on a computer, the procedures or functions according to embodiments of this application are all or partially generated. The computer may be a general-purpose computer, a dedicated computer, a computer network, or another programmable apparatus.

The computer program code or the computer program instructions may be stored in a computer-readable storage medium or may be transmitted from a computer-readable storage medium to another computer-readable storage medium. For example, the computer program code or the computer program instructions may be transmitted from a website, computer, server, or data center to another website, computer, server, or data center in a wired (for example, a coaxial cable or an optical fiber) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium, such as a floppy disk, a hard disk, or a magnetic tape; may be an optical medium, for example, a DVD; or may be a semiconductor medium, for example, a solid-state disk (SSD).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. **A communication** circuit comprising:
• a shared radio frequency circuit,
• a baseband processing circuit, and
• an antenna, wherein:
∘ the antenna is configured to receive and send a first-mode signal and a second-mode signal;
∘ the shared radio frequency circuit is coupled between the baseband processing circuit and the antenna, and the shared radio frequency circuit is configured to process the first-mode signal and the second-mode signal in a time-division manner;
∘ the shared radio frequency circuit comprises at least a first control interface, a radio frequency transceiver chip (306), at least one further component, and at least one level-2 slave control interface (3022, 3032, 3042, 3052),
▪ wherein the first control interface is disposed on the radio frequency transceiver chip (306) and comprises a level-1 slave control interface (3062) and a level-2 master control interface (3061),
▪ wherein on each component among the at least one further component a level-2 slave control interface (3022, 3032, 3042, 3052) among the at least one level-2 slave control interface (3022, 3032, 3042, 3052) is disposed,
▪ wherein each level-2 slave control interface (3022, 3032, 3042, 3052) among the at least one level-2 slave control interface (3022, 3032, 3042, 3052) is separately connected to the level-2 master control interface (3061), and
▪ each component among the at least one component is a different component among a switch chip, a power amplifier chip, an envelope tracking chip, and a low noise amplifier chip,
• wherein the switch chip is configured to configure a transmission path of the first-mode signal and the second-mode signal based on a control signal received by the level-2 slave control interface of the switch chip,
• wherein the power amplifier chip is configured to amplify the first-mode signal and the second-mode signal based on a control signal received by the level-2 slave control interface of the power amplifier chip;
• wherein the envelope tracking chip is configured to supply, based on a control signal received by the level-2 slave control interface of the envelope tracking chip, power to the power amplifier, and
• wherein the low noise amplifier chip is configured to amplify the first-mode signal and the second-mode signal based on a control signal received by the level-2 slave control interface of the low noise amplifier chip;
∘ the baseband processing circuit comprises a second control interface (1), the second control interface being a level-1 master control interface;
∘ the second control interface is coupled to the level-1 slave control interface (3062) by using a control bus, and is used for controlling the shared radio frequency circuit to process the first-mode signal and the second-mode signal in the time-division manner, and
∘ the radio frequency transceiver chip (306) is configured to:
▪ receive a control signal from the baseband processing circuit through the level-1 slave control interface (3062), and
▪ control, based on the received control signal, the at least one further component of the shared radio frequency circuit by virtue of the corresponding control signal sent by the radio frequency transceiver chip (306) through the connection between the level-2 master control interface (3061) and each level-2 slave control interface among the at least one level-2 slave control interface (3022, 3032, 3042, 3052), thereby enabling the control of the shared radio frequency circuit to process the first-mode signal and the second-mode signal in the time-division manner.

2. The communication circuit according to claim 1, wherein the control bus comprises a mobile industry processor interface, MIPI, control line or a general purpose input/output, GPIO, control line.

3. The communication circuit according to claim 1 or 2, wherein, when the shared **radio frequency** circuit is configured to switch from processing the first-mode signal to processing the second-mode signal, the shared radio frequency circuit is in a running mode.

4. The communication circuit according to any one of claims 1 to 3, wherein the shared radio frequency circuit is configured to continuously switch between processing the first-mode signal and processing the second-mode signal.

5. The communication circuit according to claim 1, wherein the control signal transmitted by the control bus comprises a control bit with a priority, which is used for configuring the priority of processing the first-mode signal and the second-mode signal by the shared radio frequency circuit.

6. The communication circuit according to any one of the preceding claims, wherein a frequency range of the first-mode signal is different from and overlaps a frequency range of the second-mode signal.

7. The communication circuit according to any one of the preceding claims, wherein the envelope tracking chip comprises an envelope tracking mode and an average power tracking mode, wherein a bandwidth of the first-mode signal is greater than a bandwidth of the second-mode signal, the envelope tracking chip is configured to supply power to the power amplifier in the average power tracking mode for the first-mode signal, and the envelope tracking chip is configured to supply power to the power amplifier in the envelope tracking mode for the second-mode signal.

8. A terminal comprising:
∘ a memory, a processor, an input/output apparatus, and the communication circuit according to any one of claims 1 to 7.

## Patentansprüche

1. Kommunikationsschaltung, die umfasst:
• eine gemeinsam genutzte Hochfrequenzschaltung,
• eine Basisbandverarbeitungsschaltung, und
• eine Antenne, wobei:
∘ die Antenne konfiguriert ist, um ein Erstmodussignal und ein Zweitmodussignal zu empfangen und zu übertragen;
∘ die gemeinsam genutzte Hochfrequenzschaltung zwischen die Basisbandverarbeitungsschaltung und die Antenne gekoppelt ist, und die gemeinsam genutzte Hochfrequenzschaltung konfiguriert ist, um das Erstmodussignal und das Zweitmodussignal auf eine Zeitmultiplexweise zu verarbeiten;
∘ die gemeinsam genutzte Hochfrequenzschaltung mindestens eine erste Steuerschnittstelle, einen Hochfrequenzsendeempfängerchip (306), mindestens eine weitere Komponente und mindestens eine Level-2-Slave-Steuerschnittstelle (3022, 3032, 3042, 3052) umfasst,
▪ wobei die erste Steuerschnittstelle auf dem Hochfrequenzsendeempfängerchip (306) angeordnet ist und eine Level-1-Slave-Steuerschnittstelle (3062) und eine Level-2-Master-Steuerschnittstelle (3061) umfasst,
▪ wobei an jeder Komponente unter der mindestens einen weiteren Komponente eine Level-2-Slave-Steuerschnittstelle (3022, 3032, 3042, 3052) unter der mindestens einen Level-2-Slave-Steuerschnittstelle (3022, 3032, 3042, 3052) angeordnet ist,
▪ wobei jede Level-2-Slave-Steuerschnittstelle (3022, 3032, 3042, 3052) unter der mindestens einen Level-2-Slave-Steuerschnittstelle (3022, 3032, 3042, 3052) separat mit der Level-2-Master-Steuerschnittstelle (3061) verbunden ist, und
▪ jede Komponente unter der mindestens einen Komponente eine unterschiedliche Komponente unter einem Schalterchip, einem Leistungsverstärkerchip, einem Hüllkurvenverfolgungschip und einem rauscharmen Verstärkerchip ist,
• wobei der Schalterchip konfiguriert ist, um einen Sendungspfad des Erstmodussignals und des Zweitmodussignals basierend auf einem Steuersignal, das durch die Level-2-Slave-Steuerschnittstelle des Schalterchips empfangen wird, zu konfigurieren,
• wobei der Leistungsverstärkerchip konfiguriert ist, um das Erstmodussignal und das Zweitmodussignal basierend auf einem Steuersignal, das durch die Level-2-Slave-Steuerschnittstelle des Leistungsverstärkerchips empfangen wird, zu verstärken;
• wobei der Hüllkurvenverfolgungschip konfiguriert ist, um, basierend auf einem Steuersignal, das durch die Level-2-Slave-Steuerschnittstelle des Hüllkurvenverfolgungschips empfangen wird, dem Leistungsverstärker Leistung zuzuführen, und
• wobei der rauscharme Verstärkerchip konfiguriert ist, um das Erstmodussignal und das Zweitmodussignal basierend auf einem Steuersignal, das durch die Level-2-Slave-Steuerschnittstelle des rauscharmen Verstärkerchips empfangen wird, zu verstärken;
∘ die Basisbandverarbeitungsschaltung eine zweite Steuerschnittstelle (1) umfasst, wobei die zweite Steuerschnittstelle eine Level-1-Master-Steuerschnittstelle ist;
∘ die zweite Steuerschnittstelle mit der Level-1-Slave-Steuerschnittstelle (3062) durch Verwenden eines Steuerbusses gekoppelt ist, und zum Steuern der gemeinsam genutzten Hochfrequenzschaltung verwendet wird, um das Erstmodussignal und das Zweitmodussignal auf eine Zeitmultiplexweise zu verarbeiten, und
∘ der Hochfrequenzsendeempfängerchip (306) konfiguriert ist zum:
▪ Empfangen eines Steuersignals von der Basisbandverarbeitungsschaltung über die Level-1-Slave-Steuerschnittstelle (3062), und
▪ Steuern, basierend auf dem empfangenen Steuersignal, der mindestens einen weiteren Komponente der gemeinsam genutzten Hochfrequenzschaltung aufgrund des entsprechenden Steuersignals, das durch den Hochfrequenzsendeempfängerchip (306) über die Verbindung zwischen der Level-2-Master-Steuerschnittstelle (3061) und jeder Level-2-Slave-Steuerschnittstelle unter der mindestens einen Level-2-Slave-Steuerschnittstelle (3022, 3032, 3042, 3052) gesendet wird, wodurch die Steuerung der gemeinsam genutzten Hochfrequenzschaltung, um das Erstmodussignal und das Zweitmodussignal auf eine Zeitmultiplexweise zu verarbeiten, ermöglicht wird.

2. Kommunikationsschaltung nach Anspruch 1, wobei der Steuerbus eine Steuerleitung einer mobilen Industrieprozessorschnittstelle (MIPI) oder eine Mehrzweck-Eingabe/Ausgabe(GPIO)-Steuerleitung umfasst.

3. Kommunikationsschaltung nach Anspruch 1 oder 2, wobei, wenn die gemeinsam genutzte Hochfrequenzschaltung konfiguriert ist, um von dem Verarbeiten des Erstmodussignals zu dem Verarbeiten des Zweitmodussignals umzuschalten, sich die gemeinsam genutzte Hochfrequenzschaltung in einem Betriebsmodus befindet.

4. Kommunikationsschaltung nach einem der Ansprüche 1 bis 3, wobei die gemeinsam genutzte Hochfrequenzschaltung konfiguriert ist, um kontinuierlich zwischen dem Verarbeiten des Erstmodussignals und dem Verarbeiten des Zweitmodussignals umzuschalten.

5. Kommunikationsschaltung nach Anspruch 1, wobei das Steuersignal, das durch den Steuerbus gesendet wird, ein Steuerbit mit einer Priorität, das zum Konfigurieren der Priorität des Verarbeitens des Erstmodussignals und des Zweitmodussignals durch die gemeinsam genutzte Hochfrequenzschaltung verwendet wird, umfasst.

6. Kommunikationsschaltung nach einem der vorstehenden Ansprüche, wobei sich ein Frequenzbereich des Erstmodussignals von einem Frequenzbereich des Zweitmodussignals unterscheidet und diesen überlappt.

7. Kommunikationsschaltung nach einem der vorstehenden Ansprüche, wobei der Hüllkurvenverfolgungschip einen Hüllkurvenverfolgungsmodus und einen Durchschnittsleistungsverfolgungsmodus umfasst, wobei eine Bandbreite des Erstmodussignals größer als eine Bandbreite des Zweitmodussignals ist, der Hüllkurvenverfolgungschip konfiguriert ist, um dem Leistungsverstärker in dem Durchschnittsleistungsverfolgungsmodus für das Erstmodussignal Leistung zuzuführen, und der Hüllkurvenverfolgungschip konfiguriert ist, um dem Leistungsverstärker in dem Hüllkurvenverfolgungsmodus für das Zweitmodussignal Leistung zuzuführen.

8. Endgerät, das umfasst:
∘ einen Speicher, einen Prozessor, eine Eingabe-/Ausgabevorrichtung und die Kommunikationsschaltung nach einem der Ansprüche 1 bis 7.

## Revendications

1. Circuit de communication comprenant :
• un circuit radiofréquence partagé,
• un circuit de traitement de bande de base, et
• une antenne, dans lequel :
∘ l'antenne est configurée pour recevoir et envoyer un signal de premier mode et un signal de second mode ;
∘ le circuit radiofréquence partagé est couplé entre le circuit de traitement de bande de base et l'antenne, et le circuit radiofréquence partagé est configuré pour traiter le signal de premier mode et le signal de second mode par une répartition dans le temps ;
∘ le circuit radiofréquence partagé comprend au moins une première interface de commande, une puce d'émetteur-récepteur radiofréquence (306), au moins un composant supplémentaire et au moins une interface de commande esclave de niveau 2 (3022, 3032, 3042, 3052),
▪ dans lequel la première interface de commande est disposée sur la puce d'émetteur-récepteur radiofréquence (306) et comprend une interface de commande esclave de niveau 1 (3062) et une interface de commande maître de niveau 2 (3061),
▪ dans lequel une interface de commande esclave de niveau 2 (3022, 3032, 3042, 3052) parmi l'au moins une interface de commande esclave de niveau 2 (3022, 3032, 3042, 3052) est disposée sur chaque composant parmi l'au moins un composant supplémentaire,
▪ dans lequel chaque interface de commande esclave de niveau 2 (3022, 3032, 3042, 3052) parmi l'au moins une interface de commande esclave de niveau 2 (3022, 3032, 3042, 3052) est connectée séparément à l'interface de commande maître de niveau 2 (3061), et
▪ chaque composant parmi l'au moins un composant est un composant différent parmi une puce de commutation, une puce d'amplificateur de puissance, une puce de suivi d'enveloppe et une puce d'amplificateur à faible bruit,
• dans lequel la puce de commutation est configurée pour configurer un chemin de transmission du signal de premier mode et du signal de second mode sur la base d'un signal de commande reçu par l'interface de commande esclave de niveau 2 de la puce de commutation,
• dans lequel la puce d'amplificateur de puissance est configurée pour amplifier le signal de premier mode et le signal de second mode sur la base d'un signal de commande reçu par l'interface de commande esclave de niveau 2 de la puce d'amplificateur de puissance ;
• dans lequel la puce de suivi d'enveloppe est configurée pour alimenter en puissance, sur la base d'un signal de commande reçu par l'interface de commande esclave de niveau 2 de la puce de suivi d'enveloppe, l'amplificateur de puissance, et
• dans lequel la puce d'amplificateur à faible bruit est configurée pour amplifier le signal de premier mode et le signal de second mode sur la base d'un signal de commande reçu par l'interface de commande esclave de niveau 2 de la puce d'amplificateur à faible bruit ;
∘ le circuit de traitement de bande de base comprend une seconde interface de commande (1), la seconde interface de commande étant une interface de commande maître de niveau 1 ;
∘ la seconde interface de commande est couplée à l'interface de commande esclave de niveau 1 (3062) en utilisant un bus de commande et est utilisée pour commander le circuit radiofréquence partagé afin de traiter le signal de premier mode et le signal de second mode par répartition dans le temps, et
∘ la puce d'émetteur-récepteur radiofréquence (306) est configurée pour :
▪ recevoir un signal de commande provenant du circuit de traitement de bande de base par l'intermédiaire de l'interface de commande esclave de niveau 1 (3062), et
▪ commander, sur la base du signal de commande reçu, l'au moins un composant supplémentaire du circuit radiofréquence partagé grâce au signal de commande correspondant envoyé par la puce d'émetteur-récepteur radiofréquence (306) par l'intermédiaire de la connexion entre l'interface de commande maître de niveau 2 (3061) et chaque interface de commande esclave de niveau 2 parmi l'au moins une interface de commande esclave de niveau 2 (3022, 3032, 3042, 3052), activant de ce fait la commande du circuit radiofréquence partagé pour traiter le signal de premier mode et le signal de second mode par répartition dans le temps.

2. Circuit de communication selon la revendication 1, dans lequel le bus de commande comprend une ligne de commande d'interface de processeur de l'industrie mobile, MIPI, ou une ligne de commande d'entrée/sortie d'usage général, GPIO.

3. Circuit de communication selon la revendication 1 ou 2, dans lequel, lorsque le circuit radiofréquence partagé est configuré pour commuter du traitement du signal de premier mode au traitement du signal de second mode, le circuit radiofréquence partagé est dans un mode de fonctionnement.

4. Circuit de communication selon l'une quelconque des revendications 1 à 3, dans lequel le circuit radiofréquence partagé est configuré pour commuter en continu entre le traitement du signal de premier mode et le traitement du signal de second mode.

5. Circuit de communication selon la revendication 1, dans lequel le signal de commande transmis par le bus de commande comprend un bit de commande avec une priorité qui est utilisé pour configurer la priorité de traitement du signal de premier mode et du signal de second mode par le circuit radiofréquence partagé.

6. Circuit de communication selon l'une quelconque des revendications précédentes, dans lequel une plage de fréquences du signal de premier mode est différente d'une plage de fréquences du signal de second mode et chevauche celle-ci.

7. Circuit de communication selon l'une quelconque des revendications précédentes, dans lequel la puce de suivi d'enveloppe comprend un mode de suivi d'enveloppe et un mode de suivi de puissance moyenne, dans lequel une largeur de bande du signal de premier mode est supérieure à une largeur de bande du signal de second mode, la puce de suivi d'enveloppe est configurée pour alimenter en puissance l'amplificateur de puissance dans le mode de suivi de puissance moyenne pour le signal de premier mode, et la puce de suivi d'enveloppe est configurée pour alimenter en puissance l'amplificateur de puissance dans le mode de suivi d'enveloppe pour le signal de second mode.

8. Terminal comprenant :
∘ une mémoire, un processeur, un appareil d'entrée/sortie et le circuit de communication selon l'une quelconque des revendications 1 à 7.
